# EUROPÄISCHE PATENTSCHRIFT

(11) **EP 0 255 077 B1**
(45) Veröffentlichungstag und Bekanntmachung des Hinweises auf die Patenterteilung: **10.02.1993**
(21) Anmeldenummer: 87110826.2
(22) Anmeldetag: 25.07.1987
(51) Int. Cl.: G01N 35/00, G01N 35/02, G01N 31/22

(54) **Vorrichtung zum Feststellen der Lage der Testfelder eines Teststreifens und Wenden desselben**
Device for detecting the position of the test area of a test strip and for turning it
Dispositif permettant de détecter la position de la zone test d'une bande test et de tourner celle-ci

(30) Priorität: 30.07.1986 DE 3625704
(43) Veröffentlichungstag der Anmeldung: 03.02.1988
(73) Patentinhaber: HOECHST AKTIENGESELLSCHAFT, 65926 Frankfurt am Main (DE)
(72) Erfinder: Gross, Jürgen, Dr., D-6238 Hofheim am Taunus (DE); Simonek, Rüdiger, Dr., D-6000 Frankfurt am Main (DE)

(56) Entgegenhaltungen:
- DE-A- 2 437 332
- US-A- 3 532 469

## Beschreibung

Die Erfindung betrifft eine Vorrichtung zum Feststellen der Lage des Testfeldes eines Teststreifens und Wenden desselben, wie sie z.B. für medizinische Tests, insbesondere für die Untersuchung von Harn verwendet werden. Sie ist Teil einer Linie, die dem automatischen Zuführen, Sortieren, Benetzen und Einlegen von Teststreifen in eine Analysenapparatur, z.B. in ein Mehrkanalphotometer, dient.

Für die allgemein bekannte Harndiagnostik stehen sogenannte Mehrfachtestreifen zum Bestimmen von Bilirubin, Urobilinogen, Ketonkörper, Ascorbinsäure, Glucose, Protein, Nitrit, des pH-Wertes und Blut zur Verfügung. Derartige Teststreifen enthalten mehrere Testfelder, auf denen die dem jeweiligen Test zugehörenden Reagenzien als Indikator angeordnet sind. Die Teststreifen werden manuell mit Urin befeuchtet und anschließend in den Analysator eingelegt. Diese Arbeit soll automatisiert werden. Hierfür ist u.a. eine Vorrichtung zum Feststellen der Lage der Testfelder und gegebenenfalls zum Wenden der Teststreifen erforderlich, damit die Testfelder aller Streifen nach oben weisen.

Die Erfindung löst die Aufgabe dadurch, daß eine Führung in eine Wendevorrichtung für die Teststreifen mündet, zwischen Führung und Wendevorrichtung ein Verschluß für die Führung angeordnet ist, der über einen Hebel mit einer Haltevorrichtung für die Teststreifen verbunden ist, die in die Führung hineinragt und den nachfolgenden Teststreifen festhält sobald der Verschluß öffnet, die Haltevorrichtung und der Verschluß drehbar gelagert und mit einer Antriebsvorrichtung versehen ist, die Wendevorrichtung eine bewegliche Sperre, die bei falscher Lage des Teststreifens durch eine in der Führung angeordnete Lageerkennungseinrichtung angetrieben wird, und eine drehbar gelagerte Walze aufweist, wobei die Walze entweder mit einer Leckageöffnung auf ihrer Umfangsfläche versehen ist, über die der Teststreifen angesaugt und von der Walze mitgenommen wird, wenn die Sperre den Teststeifen angehalten hat oder parallel zu ihrer Drehachse T-förmig geschlitzt ist, wobei ein Teil des Schlitzes eine Durchtrittsöffnung und der andere Teil des Schlitzes mit dem dem Steg der T-Kontur gegenüberliegenden Teil der Walze die Sperre bildet.

In der Führung kann eine Überwachungseinrichtung für den Teststreifenvorrat angeordnet sein.

Im folgenden wird die Erfindung anhand von lediglich einen Ausführungsweg darstellenden Zeichnungen näher erläutert. Es zeigt:
Figur 1 eine Seitenansicht der Vorrichtung, geschnitten,
Figur 2 eine Variante der Vorrichtung, ebenfalls in Seitenansicht, geschnitten,
Figur 3 die Walze gemäß Figur 2 in isometrischer Darstellung, teilweise geschnitten.

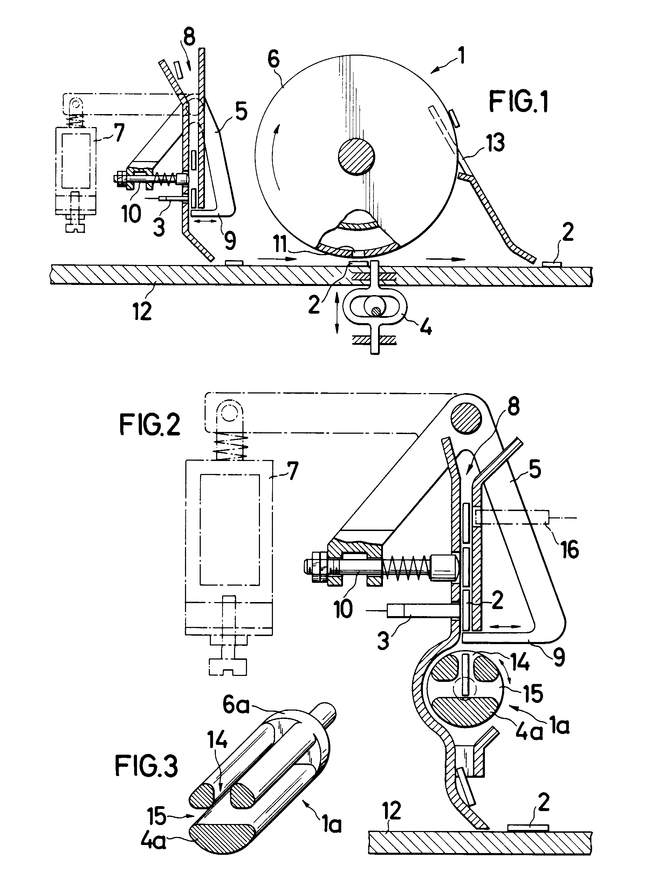

Die Vorrichtung weist eine Führung (8) auf, die in eine Wendevorrichtung (1), (1a) für die Teststreifen (2) mündet. Zwischen der Führung (8) und der Wendevorrichtung (1), (1a) ist ein Verschluß (9) für die Führung angeordnet. Der Verschluß (9) ist über einen Hebel (5) mit einer Haltevorrichtung (10), z.B. einem federbelasteten Stößel für die Teststreifen (2) verbunden. Die Haltevorrichtung (10) ragt in die Führung (8) hinein und ist synchron mit dem Verschluß drehbar gelagert. Gibt der Verschluß (9) den Austritt des Teststreifens aus der Führung (8) frei, wird der nachfolgende Teststreifen in der Führung durch die Haltevorrichtung (10) festgehalten, bis die Führung wieder verschlossen ist. Haltevorrichtung und Verschluß sind mit einer Antriebsvorrichtung (7) versehen. Die Wendevorrichtung (1), (1a) weist eine bewegliche Sperre (4), (4a) auf, die durch die aufbereiteten Impulse einer Lageerkennungseinrichtung (3), z.B. einer Reflexionslichtschranke, angetrieben wird. Mit der Lageerkennungseinrichtung (3) wird die Lage des Testfeldes auf dem Teststreifen festgestellt. Zeigt es in die falsche Richtung, verhindert die Sperre den Weitertransport des Teststreifens zum Analysenapparat (nicht dargestellt). Der Teststreifen wird gewendet. Das Wenden kann gemäß Figur 1 mittels einer hohlen Walze (6), die evakuierbar ist, und eine Leckageöffnung (11) aufweist, geschehen. Wird der Teststreifen von der Sperre (4) angehalten, wird er durch die Leckageöffnung vom Vakuum angesogen, am Walzenumfang gehalten und durch Drehen der Walze in Pfeilrichtung gewendet. Mit dem Abstreifer (13) wird der Teststreifen von der Walze abgenommen.

Gemäß Figur 2 geschieht das Wenden mittels einer Walze (6a), die parallel zu ihrer Drehachse mit einem im Querschnitt T-förmigen Schlitz versehen ist. Die Öffnung (15) ist als Durchtrittsöffnung in der Walze (6a) vorgesehen, während der Steg (14) der T-Kontur an der Sperre (4a) endet. Signalisiert die Lageerkennungseinrichtung (3) die richtige Lage des Teststreifens, kann der Teststreifen ohne Hindernis die Walze (6a) passieren. Andernfalls wird er von der Sperre (4a) angehalten und durch Drehen der Walze (6a) um 180° gewendet. Zur Überwachung des Teststreifenvorrates in der Führung kann diese mit einer Überwachungseinrichtung (16) ausgerüstet sein.

## Patentansprüche

1. Vorrichtung zum Feststellen der Lage der Testfelder eines Teststreifens und Wenden desselben, dadurch gekennzeichnet, daß eine Führung (8) in eine Wendevorrichtung (1, 1a) für die Teststreifen (2) mündet, zwischen Führung (8) und Wendevorrichtung (1, 1a) ein Verschluß (9) für die Führung (8) angeordnet ist, der über einen Hebel (5) mit einer Haltevorrichtung (10) für die Teststreifen (2) verbunden ist, die in die Führung (8) hineinragt und den nachfolgenden Teststreifen festhält, sobald der Verschluß (9) öffnet, die Haltevorrichtung (10) und der Verschluß (9) drehbar gelagert und mit einer Antriebsvorrichtung (7) versehen ist, die Wendevorrichtung (1, 1a) eine bewegliche Sperre (4, 4a), die bei falscher Lage des Teststreifens durch eine in der Führung (8) angeordnete Lagerkennungseinrichtung (3) angetrieben wird, und eine drehbar gelagerte Walze (6, 6a) aufweist, wobei die Walze entweder mit einer Leckageöffnung (11) auf ihrer Umfangsfläche versehen ist, über die der Teststreifen angesaugt und von der Walze mitgenommen wird, wenn die Sperre (4) den Teststreifen angehalten hat oder parallel zu ihrer Drehachse T-förmig geschlitzt ist, wobei ein Teil des Schlitzes eine Durchtrittsöffnung (15) und der andere Teil des Schlitzes mit dem dem Steg (14) der T-Kontur gegenüberliegenden Teil der Walze die Sperre (4a) bildet.

2. Vorrichtung nach Anspruch 1, dadurch gekennzeichnet, daß in der Führung (8) eine Überwachungseinrichtung (16) für den Teststreifenvorrat angeordnet ist.

## Claims

1. An apparatus for fixing the position of the test zones of a test strip and for reversing the latter, wherein a guide (8) opens into a reversing device (1, 1a) for the test strips (2), between the guide (8) and reversing device (1, 1a) is arranged a closing means (9) for the guide (8), the said closing means is connected via a lever (5) to a holding device (10) for the test strips (2) which projects into the guide (8) and holds the subsequent test strips as soon as the closing means (9) opens, the holding device (10) and the closing means (9) is mounted rotatably and is equipped with a drive device (7), the reversing device (1, 1a) has a moveable stop (4, 4a) which is driven by a position-detection means (3) arranged in the guide (8) if the test strip is in the wrong position, and a rotatably mounted roller (6, 6a), the roller either being provided, on its peripheral surface, with a leakage orifice (11), via which the test strip is sucked up and taken up by the roller when the stop (4) has stopped the test strip, or having a T-shaped slot parallel to its axis of rotation, one part of the slot forming a through orifice (15) and the other part of the slot forming the stop (4a) with the part of the roller located opposite the crosspiece (14) of the T-contour.

2. The apparatus as claimed in claim 1, wherein a monitoring device (16) for the test-strip supply is arranged in the guide (8).

## Revendications

1. Dispositif pour déterminer la position des zones de test d'une bande de test et retourner cette bande, caractérisé en ce qu'un guide (8) débouche dans un dispositif de retournement (1,1a) pour les bandes de test (2), qu'entre le guide (8) et le dispositif de retournement (1,1a) est disposé un dispositif de fermeture (9) pour le guide (8), qui est raccordé par l'intermédiaire d'un levier (5) à un dispositif de retenue (10) pour les bandes de test (2), qui pénètre dans le guide (8) et maintient fermement les bandes de test suivantes, dès que le dispositif de fermeture (9) s'ouvre, que le dispositif de retenue (10) et le dispositif de fermeture (9) sont montés de façon à pouvoir pivoter et sont équipés d'un dispositif d'entraînement (7), que le dispositif de retournement (1,1a) possède une unité de blocage mobile (4,4a), qui dans le cas d'une position erronée de la bande de test, est entraînée par un dispositif d'identification de position (3) installé dans le guide (8), et un cylindre monté rotatif (6,6a), le cylindre étant soit équipé, sur sa surface périphérique, d'une ouverture de fuite (11), au moyen de laquelle la bande de test est aspirée et est entraînée par le cylindre, lorsque l'unité de blocage (4) a arrêté la bande de test, soit fendu en forme de T, parallèlement à son axe de rotation, une partie de la fente formant une ouverture de passage (15) et l'autre partie de la fente formant, avec la barrette (14) de la partie du cylindre, située en vis-à-vis du contour en forme de T, l'unité de blocage (4a).

2. Dispositif selon la revendication 1, caractérisé en ce qu'un dispositif (16) de contrôle de la réserve de bandes de test est disposé dans le guide (8).
